# EUROPEAN PATENT APPLICATION

(11) **EP 4 458 605 A1**
(43) Date of publication of application: **06.11.2024**
(21) Application number: 22915528.8
(22) Date of filing: 31.10.2022
(51) Int. Cl.: B60L 9/18, B60L 50/60, B60K 1/04

(54) **ELECTRIC WORK VEHICLE**

(30) Priority: 27.12.2021 JP 2021213173
(71) Applicant: Kubota Corporation, Osaka 556-8601 (JP)
(72) Inventor: TAKASE, Shunya, Sakai-shi, Osaka 590-0908 (JP); YAMANAKA, Yukifumi, Sakai-shi, Osaka 590-0908 (JP); TAMBA, Daiki, Sakai-shi, Osaka 590-0908 (JP); MIZOGUCHI, Yoshiki, Sakai-shi, Osaka 590-0908 (JP)
(74) Representative: Müller-Boré & Partner Patentanwälte PartG mbB
(86) International application number: PCT/JP2022/040732
(87) International publication number: WO 2023/127295

(57) **Abstract**

An electric work vehicle includes: a battery (4) installed in a machine body; an inverter (14) that converts DC power that is based on output from the battery (4) to AC power; a motor (M) driven by the AC power converted by the inverter (14); a rotational speed information obtaining unit (41) that obtains rotational speed information indicative of a rotational speed of the motor (M); a travel device (42) driven by the motor (M); an operation member (43) that changes a required rotational speed required for the motor (M); a storage unit (45) storing an output map defining a relationship between a torque value that the motor (M) is allowed to output and the rotational speed of the motor (M); and a controller (44) that controls a current flowing through the motor (M) by running the inverter (14) based on the rotational speed information, the required rotational speed, and the output map, wherein the output map is set so as to have a shape similar to a shape of a torque curve of an engine in a high rotation range where the rotational speed of the motor (M) is at least a predetermined rotational speed.

## Description

### Technical Field

The present invention relates to an electric work vehicle that travels by using electric energy.

### Background Art

Electric work vehicles that travel by using electric energy as a motive power source have been conventionally used. An example of such an electric work vehicle is described in Patent Document 1 noted below.

Patent Document 1 describes an electric work vehicle that includes a battery, a motor driven by power supplied from the battery, and a travel device driven by the motor.

### Prior Art Document

### Patent Document

Patent Document 1: JP 2021-957A

### Disclosure of the Invention

### Problem to be Solved by the Invention

Other than the electric work vehicles described above, there are work vehicles that use an engine as a motive power source. A motor that is used as the motive power source of an electric work vehicle has a linear or approximately linear relationship between rotational speed and output torque. On the other hand, an engine may stop (so-called "engine stall") if a high torque is to be obtained from the engine when the rotational speed is low, for example. Also, the torque that the engine can output decreases with an increase in the rotational speed. Since the relationship between rotational speed and output torque of a motor differs from the relationship between rotational speed and output torque of an engine, a user who has switched from a work vehicle that uses an engine as a motive power source to an electric work vehicle may feel like something is wrong due to a difference in behavior between the work vehicle and the electric work vehicle.

Therefore, there is demand for an electric work vehicle whose behavior is similar to the behavior of a work vehicle that uses an engine as a motive power source.

### Means for Solving Problem

An electric work vehicle according to the present invention has a characteristic configuration including: a battery installed in a machine body; an inverter configured to convert DC power that is based on output from the battery to AC power; a motor configured to be driven by the AC power converted by the inverter; a rotational speed information obtaining unit configured to obtain rotational speed information indicative of a rotational speed of the motor; a travel device configured to be driven by the motor; an operation member configured to change a required rotational speed required for the motor; a storage unit storing an output map defining a relationship between a torque value that the motor is allowed to output and the rotational speed of the motor; and a controller configured to control a current flowing through the motor based on the rotational speed information, the required rotational speed, and the output map, wherein, in a high rotation range where the rotational speed of the motor is at least a predetermined rotational speed, the output map is set so as to have a shape that is similar to a shape of a torque curve defining a relationship between an output torque and a rotational speed of an engine in a non-electric work vehicle.

With this configuration, it is possible to make the relationship between a torque value that the motor is allowed to output and a rotational speed of the motor approximate to the relationship between an output torque of an engine and a rotational speed of the engine in the high rotation range where the rotational speed of the motor is at least the predetermined rotational speed. Therefore, the electric work vehicle can behave similarly to a work vehicle that uses an engine as a motive power source.

It is preferable that the high rotation range of the output map is defined in such a manner that the torque value that the motor is allowed to output decreases as the rotational speed of the motor increases from the predetermined rotational speed.

When the rotational speed of an engine becomes higher than a predetermined rotational speed, the torque that the engine can output decreases. Therefore, with this configuration, it is possible to make the characteristics of the motor approximate to the characteristics of an engine, and accordingly make the behavior of the electric work vehicle closer to the behavior of the work vehicle that uses an engine as the motive power source.

It is preferable that the output map is defined in such a manner that the motor stops when the rotational speed of the motor is not higher than a first rotational speed set in advance.

The engine stops if an excessively high torque is to be output from the engine when the rotational speed of the engine is lower than a predetermined rotational speed. Therefore, with this configuration, it is possible to make the characteristics of the motor rotating at a low rotational speed approximate to the characteristics of an engine, and accordingly make the behavior of the electric work vehicle closer to the behavior of the work vehicle that uses an engine as the motive power source.

It is preferable that the output map is defined in such a manner that the motor stops when the rotational speed of the motor is higher than or equal to a second rotational speed that is higher than the first rotational speed.

With this configuration, it is possible to restrict driving of the motor at a high rotational speed, and accordingly suppress deterioration of the motor.

It is preferable that the output map is defined in such a manner that, when a range of rotational speed at which the motor is rotatable is divided into a low rotation range including the first rotational speed and the high rotation range including the second rotational speed, the torque value that the motor is allowed to output increases as the rotational speed of the motor increases from the first rotational speed to the predetermined rotational speed.

The torque that an engine can output increases as the rotational speed of the engine increases in the low rotation range where the rotational speed is not higher than the predetermined rotational speed. Therefore, with this configuration, it is possible to make the characteristics of the motor approximate to the characteristics of an engine, and accordingly make the behavior of the electric work vehicle closer to the behavior of the work vehicle that uses an engine as the motive power source.

It is preferable that the output map is defined in such a manner that, when a range of rotational speed at which the motor is rotatable is divided into a low rotation range including the first rotational speed and the high rotation range including the second rotational speed, the torque value that the motor is allowed to output is constant when the rotational speed of the motor is within a range from the first rotational speed to the predetermined rotational speed.

Even when the rotational speed of the motor is low, this configuration enables the motor to output a torque that is larger than the torque that an engine can output at the low rotational speed.

### Brief Description of the Drawings

FIG. 1 is a left side view of a tractor.
FIG. 2 is a left side view showing arrangement of an inverter and the like.
FIG. 3 is a diagram showing a flow of motive power transmission.
FIG. 4 is a diagram showing functional units for driving a motor.
FIG. 5 is a diagram showing a relationship between an operation amount of an operation member and a required rotational speed of the motor.
FIG. 6 shows an example of a torque curve of the motor.
FIG. 7 is a diagram showing an example of notification performed by a notification unit.
FIG. 8 is a diagram showing an example in which state information is displayed on an output map.
FIG. 9 shows another example of the torque curve of the motor.

### Best Mode for Carrying out the Invention

An electric work vehicle according to the present invention is configured to behave similarly to a work vehicle that uses an engine as a motive power source, when a motor is rotating at a low speed. The following describes an electric work vehicle according to the present embodiment. Note that the following describes a case where the electric work vehicle is a tractor.

An embodiment of the present invention will be described based on the drawings. In the following description, the direction of an arrow F and the direction of an arrow B in the drawings will be respectively referred to as "the front side" and "the rear side" unless otherwise stated. Also, the direction of an arrow U and the direction of an arrow D in the drawings will be respectively referred to as "the upper side" and "the lower side".

### Overall Configuration of Tractor

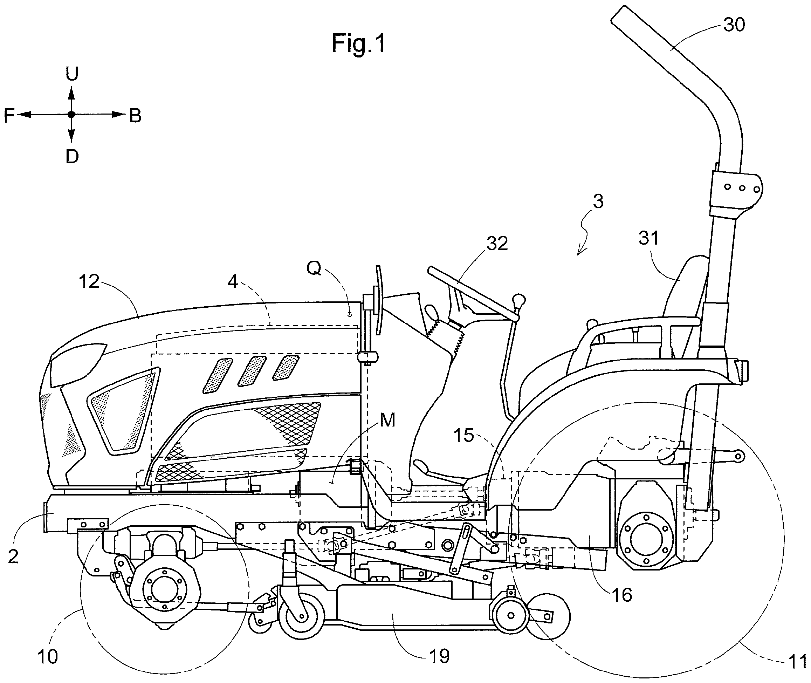

The following describes a tractor according to the present embodiment. As shown in FIG. 1, the tractor includes left and right front wheels 10, left and right rear wheels 11, and a cover member 12.

The tractor also includes a body frame 2 and a driving section 3. The body frame 2 is supported by the left and right front wheels 10 and the left and right rear wheels 11.

The cover member 12 is disposed in a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit on the driver's seat 31. Accordingly, the operator can get on the driving section 3. The operator steers the left and right front wheels 10 by operating the steering wheel 32. The operator can perform various driving operations in the driving section 3.

The tractor includes a battery 4 for driving. The cover member 12 is configured to be pivotable about an opening/closing axis Q extending in the leftright direction of the body. Accordingly, the cover member 12 is configured to be openable and closable. When the cover member 12 is closed, the battery 4 for driving is covered by the cover member 12.

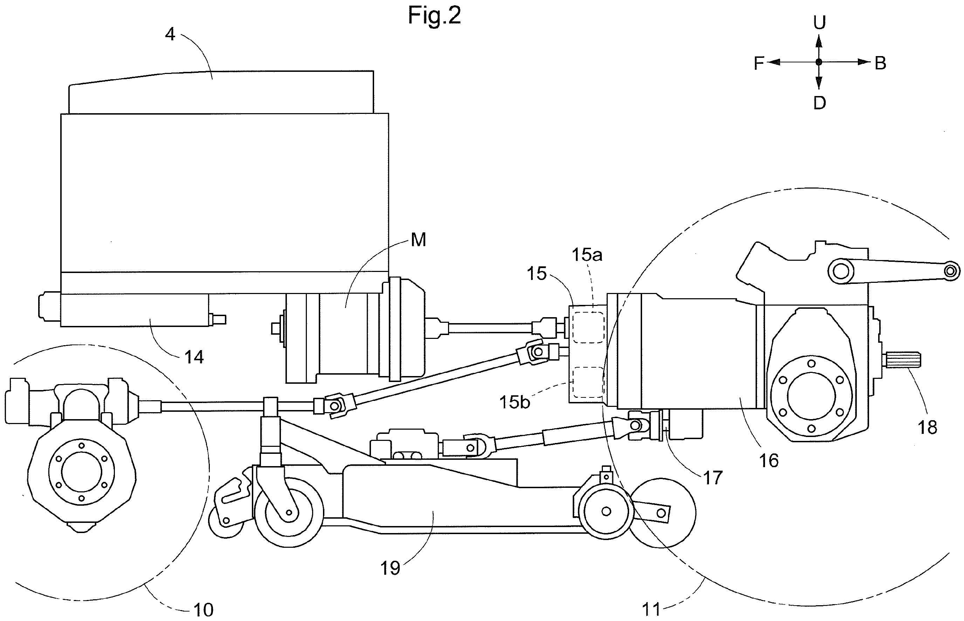

As shown in FIG. 2, the tractor includes an inverter 14 and a motor M. The battery 4 for driving supplies power to the inverter 14. The inverter 14 converts DC power supplied from the battery 4 for driving to AC power, and supplies the AC power to the motor M. The motor M is driven by the AC power supplied from the inverter 14.

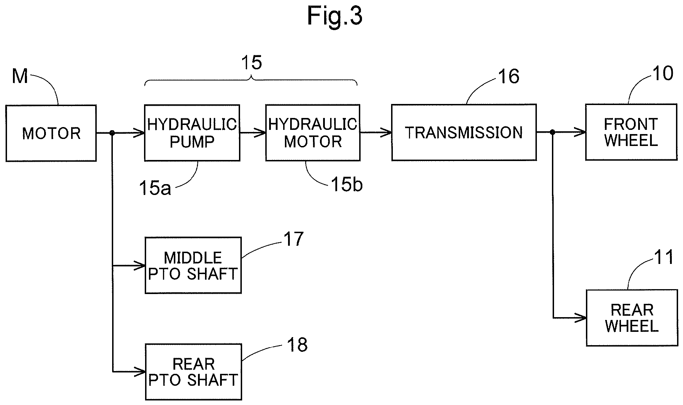

As shown in FIGS. 2 and 3, the tractor includes a hydraulic continuously variable transmission 15 and a transmission 16. As shown in FIG. 3, the hydraulic continuously variable transmission 15 includes a hydraulic pump 15a and a hydraulic motor 15b.

The hydraulic pump 15a is driven by rotational motive power transmitted from the motor M. As a result of the hydraulic pump 15a being driven, rotational motive power is output from the hydraulic motor 15b. The hydraulic continuously variable transmission 15 is configured to change the speed of rotational motive power between the hydraulic pump 15a and the hydraulic motor 15b. Also, the hydraulic continuously variable transmission 15 is configured to be capable of changing the transmission ratio in a stepless manner.

The rotational motive power output from the hydraulic motor 15b is transmitted to the transmission 16. The speed of the rotational motive power transmitted to the transmission 16 is changed by a gear transmission mechanism included in the transmission 16, and the rotational motive power is distributed to the left and right front wheels 10 and the left and right rear wheels 11. Thus, the left and right front wheels 10 and the left and right rear wheels 11 are driven.

As shown in FIGS. 2 and 3, the tractor also includes a middle PTO shaft 17 and a rear PTO shaft 18. Rotational motive power output from the motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 2. The grass cutting device 19 is driven by rotational motive power transmitted by the middle PTO shaft 17.

### Motor Control

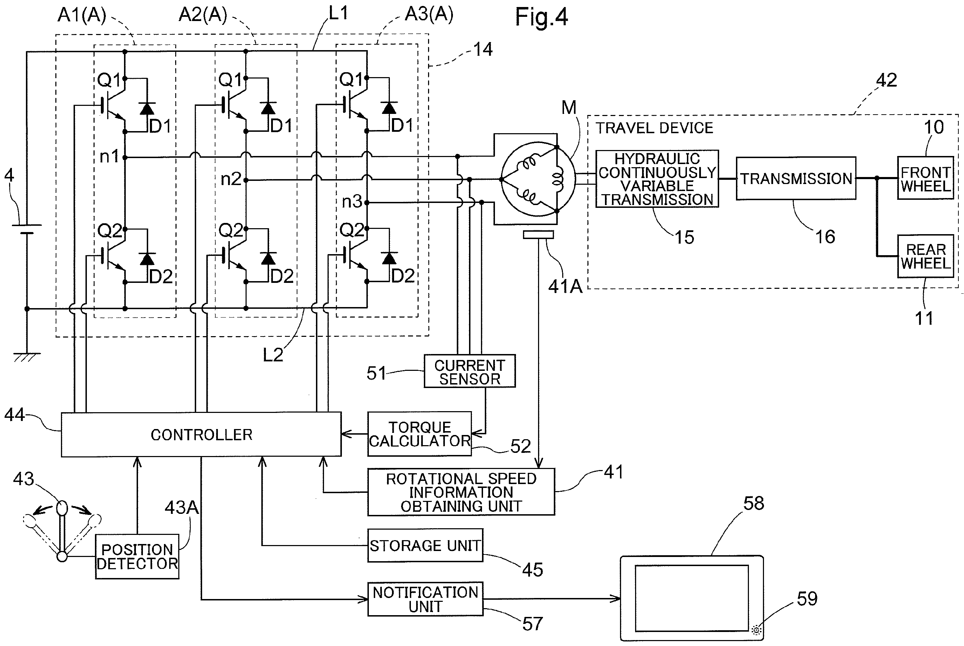

FIG. 4 is a block diagram showing functional units relating to driving of the motor M. The block diagram of FIG. 4 shows the battery (battery for driving) 4, the inverter 14, the motor M, a rotational speed information obtaining unit 41, a travel device 42, an operation member 43, a controller 44, a storage unit 45, a current sensor 51, a torque calculator 52, and a notification unit 57. In order to drive the motor M, each functional unit is constituted by hardware and/or software, including a CPU as a core component.

The battery 4 covered by the cover member 12 as described above is installed in the machine body. Electric energy stored in the battery 4 is used to drive the motor M.

The inverter 14 converts DC power that is output from the battery 4 to AC power. The "output from the battery 4" refers to a DC voltage and a DC current output from the battery 4. Accordingly, DC power output from the battery 4 is DC power due to a DC voltage and a DC current output from the battery 4.

In the present embodiment, the inverter 14 includes three arm portions A each including a first switching element Q1 and a second switching element Q2 connected in series between a first power supply line L1 and a second power supply line L2. The first power supply line L1 is connected to a positive terminal of the two output terminals of the battery 4, and the second power supply line L2 is connected to a negative terminal of the two output terminals of the battery 4. The inverter 14 includes the three arm portions A between the first power supply line L1 and the second power supply line L2. Hereinafter, the three arm portions A will be referred to as arm portions A1, A2, and A3 when distinguished from each other. In the present embodiment, both the first switching element Q1 and the second switching element Q2 are constituted by P-type IGBTs. A collector terminal of the first switching element Q1 is connected to the first power supply line L1, and an emitter terminal of the first switching element Q1 is connected to a collector terminal of the second switching element Q2. An emitter terminal of the second switching element Q2 is connected to the second power supply line L2. A diode D1 is provided between the emitter terminal and the collector terminal of the first switching element Q1, and an anode terminal and a cathode terminal of the diode D1 are respectively connected to the emitter terminal and the collector terminal of the first switching element Q1. Also, a diode D2 is provided between the emitter terminal and the collector terminal of the second switching element Q2, and an anode terminal and a cathode terminal of the diode D2 are respectively connected to the emitter terminal and the collector terminal of the second switching element Q2. Respective gate terminals of the first switching element Q1 and the second switching element Q2 are connected to the controller 44, which will be described later. The controller 44 performs PWM control to let current flow through the first switching element Q 1 of an arm portion A of the inverter 14 and the second switching element Q2 of one of the other two arm portions A of the inverter 14. Accordingly, DC power output from the battery 4 is converted to AC power in accordance with the frequency of a PWM control signal.

The motor M is driven by the AC power converted by the inverter 14. Three terminals of the motor M are respectively connected to: a first node n1 to which the first switching element Q1 and the second switching element Q2 of the arm portion A1 are connected; a second node n2 to which the first switching element Q1 and the second switching element Q2 of the arm portion A2 are connected; and a third node n3 to which the first switching element Q1 and the second switching element Q2 of the arm portion A3 are connected. The first node n1 to which the first switching element Q1 and the second switching element Q2 of the arm portion A1 are connected is a portion at which the emitter terminal of the first switching element Q 1 and the collector terminal of the second switching element Q2 constituting the arm potion A1 are connected. The second node n2 to which the first switching element Q 1 and the second switching element Q2 of the arm portion A2 are connected is a portion at which the emitter terminal of the first switching element Q1 and the collector terminal of the second switching element Q2 constituting the arm potion A2 are connected. The third node n3 to which the first switching element Q1 and the second switching element Q2 of the arm portion A3 are connected is a portion at which the emitter terminal of the first switching element Q1 and the collector terminal of the second switching element Q2 constituting the arm potion A3 are connected. FIG. 4 shows a case where the coils of the motor M are connected in a delta configuration, but the coils of the motor M may also be connected in a star configuration.

The rotational speed information obtaining unit 41 obtains rotational speed information indicative of a rotational speed of the motor M. The rotational speed of the motor M is a rotational speed of a rotor included in the motor M. The rotational speed can be detected with use of a rotation sensor 41A that includes a Hall element, for example. Alternatively, it is possible to calculate the rotational speed of the motor M based on the current flowing through the motor M, instead of using the rotation sensor 41A. In this case, the rotational speed can be calculated based on a detection result obtained from the current sensor 51, which will be described later. The detection result of the rotational speed of the motor M obtained from the rotation sensor 41A is transmitted as the rotational speed information to the rotational speed information obtaining unit 41.

The travel device 42 is driven by the motor M. In the present embodiment, the hydraulic continuously variable transmission 15, the transmission 16, the left and right front wheels 10, and the left and right rear wheels 11 described above are collectively referred to as the travel device 42. As described above, rotational motive power output from the motor M is transmitted via the hydraulic continuously variable transmission 15 to the transmission 16. The speed of the rotational motive power transmitted to the transmission 16 is changed by the gear transmission mechanism included in the transmission 16, and the rotational motive power is distributed to the left and right front wheels 10 and the left and right rear wheels 11. Thus, the left and right front wheels 10 and the left and right rear wheels 11 are driven as described above, and the tractor is movable forward.

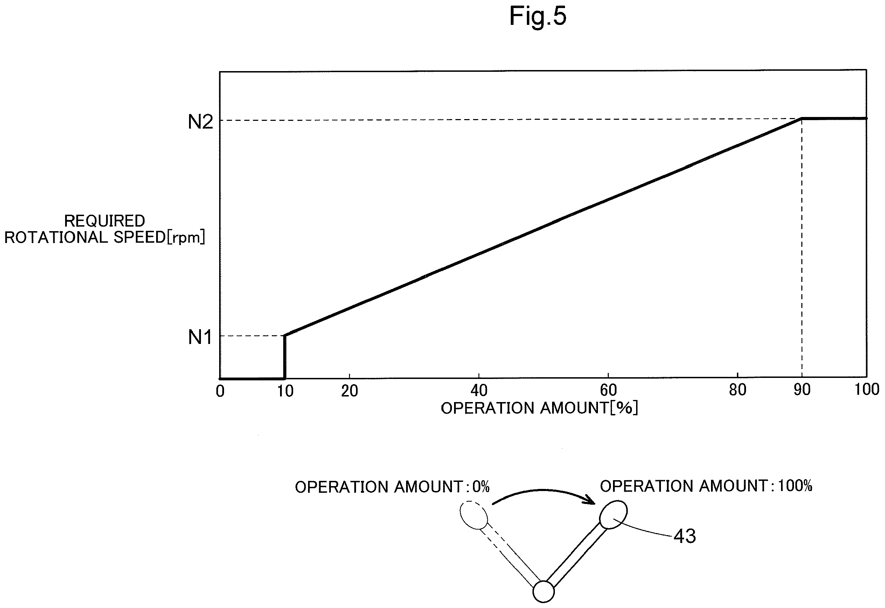

The operation member 43 changes a required rotational speed required for the motor M. The required rotational speed required for the motor M is a command value indicative of a rotational speed of rotational motive power that the operator wants the motor M to output, i.e., a commanded rotational speed. In the present embodiment, the operation member 43 is a lever that is provided on a side of the driver's seat 31 and pivotable in the front-rear direction. As the operation member 43 is inclined further forward, the required rotational speed increases and the motor M rotates at a higher speed, and the operation member 43 is configured to be stably kept at a position to which the operation member 43 is operated. FIG. 5 shows a relationship between an operation amount of the operation member 43 and the required rotational speed of the motor M. In FIG. 5, the vertical axis indicates the required rotational speed of the motor M, and the horizontal axis indicates the operation amount of the operation member 43. In the example shown in FIG. 5, when the operation amount is 10[%], the required rotational speed is N1 [rpm], and when the operation amount is 90[%], the required rotational speed is N2 [rpm]. The required rotational speed is set to be proportional to the operation amount in the range from 10[%] to 90[%]. The operation amount is expressed in the unit of %, and 0[%] corresponds to a state where the operation member 43 is closest to the operator, and 100[%] corresponds to a state where the operation member 43 is inclined forward as much as possible. In this example, the operation member is configured such that, when the operation amount is less than 10[%], the required rotational speed is 0 [rpm], and when the operation amount is 90[%] or more, the required rotational speed is N2 [rpm] as described later in detail. In this example, the required rotational speed of the motor M can be set in accordance with the operation amount of the operation member 43 based on the relationship described above.

Referring back to FIG. 4, in the present embodiment, the operation amount of the operation member 43, i.e., the position of the operation member 43 in the front-rear direction is detected by a position detector 43A. Accordingly, it is possible to identify the required rotational speed required for the motor M based on the position of the operation member 43 detected by the position detector 43A.

The storage unit 45 stores an output map that defines a relationship between a torque value that the motor M is allowed to output and a rotational speed of the motor M. The relationship between a torque value that the motor M is allowed to output and a rotational speed of the motor M indicates the value of torque that the motor M can output when rotating at a predetermined rotational speed while maintaining the predetermined rotational speed. The output map corresponds to a torque curve that defines a relationship between an output torque of an engine and a rotational speed of the engine, for example. The output map can be defined as at least one of a characteristic diagram and a mathematical formula, for example. Of course, the output map can also be defined by means other than a characteristic diagram and a mathematical formula. The storage unit 45 stores the output map indicative of the value of torque that the motor M can output when rotating at a predetermined rotational speed while maintaining the predetermined rotational speed.

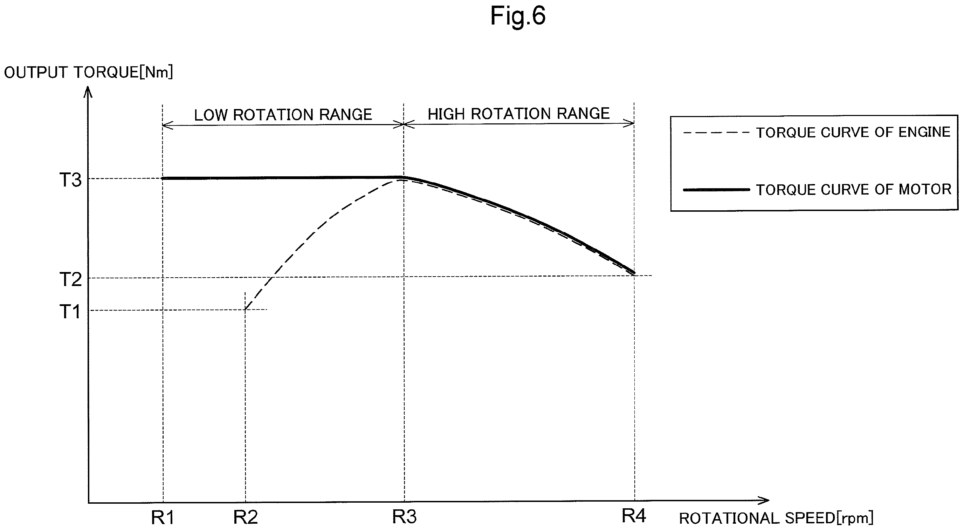

FIG. 6 shows an example of such an output map. In the output map shown in FIG. 6, the vertical axis indicates the output torque that the motor M can output, and the horizontal axis indicates the rotational speed of the motor M. In FIG. 6, the output map of the motor M (torque curve of the motor M) is shown by a solid line, and a torque curve of an engine is shown by a dashed line for reference. The output torque that the engine can output is T1 when the rotational speed is R2, and the output torque that the engine can output increases from T1 to T3 as the rotational speed increases from R2 to R3. The output torque that the engine can output decreases from T3 to T2 as the rotational speed increases from R3 to R4. Although the relationship between T1 and T2 is T1<T2 in FIG. 6, the relationship may also be T1>T2.

On the other hand, the torque curve (output map) of the motor M is defined in such a manner that, when a range of rotational speed at which the motor M is rotatable is divided into a low rotation range including a first rotational speed R1 and a high rotation range including a second rotational speed R4, the torque value that the motor M is allowed to output decreases as the rotational speed of the motor M increases from a predetermined rotational speed R3. In this example, the low rotation range including the first rotational speed R1 is a range where the rotational speed is R1 or more and less than R3. Accordingly, the low rotation range includes R1. In this example, the high rotation range including the second rotational speed R4 is a range where the rotational speed is at least R3 but not more than R4. Accordingly, the high rotation range includes R4. As shown in FIG. 6, in this example, the output map of the motor M is defined in such a manner that the motor M can output a substantially constant output torque T3 irrespective of the rotational speed within the range from R1, which is lower than R3, up to R3, and the output torque that the motor M can output decreases from T3 to T2 as the rotational speed increases from R3 to R4.

As described above, in the high rotation range where the rotational speed of the motor M is at least the predetermined rotational speed (in this example, R3), the output map of the motor M has a shape that is similar to the shape of the torque curve defining a relationship between an output torque and a rotational speed of an engine in a non-electric work vehicle. That is to say, in the example shown in FIG. 6, when the rotational speed of the motor M is within the range from R3 to R4, the torque that the motor M can output matches the torque that the engine of a non-electric work vehicle (tractor using the engine as a motive power source) can output when the rotational speed of the engine is within the range from R3 to R4, and when the rotational speed of the motor M is within the range from the first rotational speed R1 to the predetermined rotational speed R3, the torque (torque value) that the motor M can output is substantially constant unlike the torque that the engine of a non-electric work vehicle can output when the rotational speed is R3 or less.

Referring back to FIG. 4, the controller 44 is configured to control a current flowing through the motor M by running the inverter 14 based on the rotational speed information, the required rotational speed, and the output map. The rotational speed information is transmitted from the rotational speed information obtaining unit 41 to the controller 44. The required rotational speed can be identified based on the detection result of the position of the operation member 43, which is transmitted from the position detector 43A. The output map is stored in the storage unit 45 described above, and the controller 44 refers to the output map. The current flowing through the motor M is a current output from the inverter 14 and flowing through the coils of the motor M. Accordingly, the controller 44 is configured to control the current flowing through the coils of the motor M by controlling the inverter 14 in such a manner that the current rotational speed of the motor M indicated by the rotational speed information becomes equal to the required rotational speed identified based on the detection result obtained from the position detector 43A and the relationship between a torque value that the motor M is allowed to output and a rotational speed of the motor M, which is defined by the output map stored in the storage unit 45, is satisfied.

Specifically, when the rotational speed of the motor M is R1 or more and less than R3, the controller 44 is configured to control the current flowing through the motor M in such a manner that the output torque does not exceed T3, and when the rotational speed of the motor M is within the range from R3 to R4, the controller 44 is configured to control the current flowing through the motor M in such a manner that the output torque does not exceed the torque shown in the output map of FIG. 6. This configuration makes it possible to obtain the torque that the motor M can output and to control the rotational motive power output from the motor M by operating the operation member 43. Also, the motor M is controlled based on the torque curve of the motor M that is similar to the torque curve of an engine, and therefore, even if the operator has switched from a tractor that uses an engine as a motive power source to the electric tractor, for example, the operator can be kept from feeling that something is wrong.

The controller 44 may also be configured to stop driving the motor M irrespective of the required rotational speed when the load applied to the motor M is higher than a load set in advance. The load applied to the motor M is the torque acting on the motor M. The load set in advance is a suitable load at which driving of the motor M should be stopped. For example, the load can be set based on a load acting on an engine when the engine stalls. "Irrespective of the required rotational speed" means that the rotational speed of the motor M is not controlled so as to match the required rotational speed specified by the operation member 43. "Stops driving the motor M" means shutting off the current flowing from the inverter 14 to the coils of the motor M. Accordingly, when the torque acting on the motor M becomes higher than the predetermined load at which driving of the motor M should be stopped, the controller 44 is configured to stop the motor M by shutting off the current flowing from the inverter 14 to the coils of the motor M without making the rotational speed of the motor M match the required rotational speed specified by the operation member 43.

The torque of the motor M can be calculated based on the current flowing through the motor M. The current value of the current flowing through the motor M is detected by the current sensor 51. The current flowing through the motor M is substantially equal to a current flowing through a cable connecting the first node n1 and the motor M, a cable connecting the second node n2 and the motor M, or a cable connecting the third node n3 and the motor M, and therefore, the current sensor 51 may detect the current value of the current flowing through the motor M based on the current flowing through any of these cables. The current sensor 51 may detect the current with use of a Hall element without interrupting these cables or detect the current based on a voltage drop at resistors disposed between these cables and a reference potential (e.g., ground potential). The detection result of the current value obtained by the current sensor 51 is transmitted to the torque calculator 52. Note that the detection result of the current value may be transmitted to the controller 44, and the controller 44 may perform PWM control of the inverter 14 taking the current flowing through the motor M into account.

The torque calculator 52 calculates the torque output from the motor M based on the current value. There is a predetermined relationship between the current value of the current flowing through the motor M and the torque output from the motor M. Preferably, a map showing the relationship is stored in the torque calculator 52 in advance, and the output torque corresponding to the current value of the current flowing through the motor M is calculated based on the map.

In this case, it is preferable that the controller 44 is configured to stop driving the motor M when the torque output from the motor M is larger than a torque value set in advance. The torque output from the motor M is the torque calculated by the torque calculator 52. It is preferable that the controller 44 compares the torque with the torque value set in advance, and if the torque is larger than the torque value, determines that the load applied to the motor M is higher than the load set in advance, and stops driving the motor M.

Also, it is preferable that the controller 44 is configured to stop driving the motor M irrespective of the required rotational speed when the rotational speed of the motor M is not higher than the first rotational speed R1 set in advance. The rotational speed of the motor M is obtained by the rotational speed information obtaining unit 41. In the case shown in FIG. 6, the first rotational speed set in advance is R1, which can be set to several hundreds revolutions per minute, for example. Accordingly, it is preferable that the controller 44 is configured to stop driving the motor M when the rotational speed of the motor M obtained by the rotational speed information obtaining unit 41 is not higher than the rotational speed R1 set in advance. In this case, the output map is defined in such a manner that the motor M stops when the rotational speed of the motor M is not higher than the first rotational speed set in advance.

Furthermore, it is preferable that the output map is defined in such a manner that the motor M stops when the rotational speed of the motor M is higher than or equal to the second rotational speed R4, which is higher than the first rotational speed R1. In the case shown in FIG. 6, the first rotational speed is R1 and the second rotational speed is R4. Accordingly, in this case, it is preferable that, when the rotational speed of the motor M is higher than R4, the controller 44 is configured to stop the motor M by limiting the current flowing through the motor M.

With this configuration, it is possible to simulate an engine stall of a tractor including an engine, for example. Therefore, for example, the operator who has switched from a tractor including an engine can use the tractor including the motor M without feeling that something is wrong. Also, it is possible to suppress deterioration of the motor M due to the motor M being continuously driven at a high rotational speed.

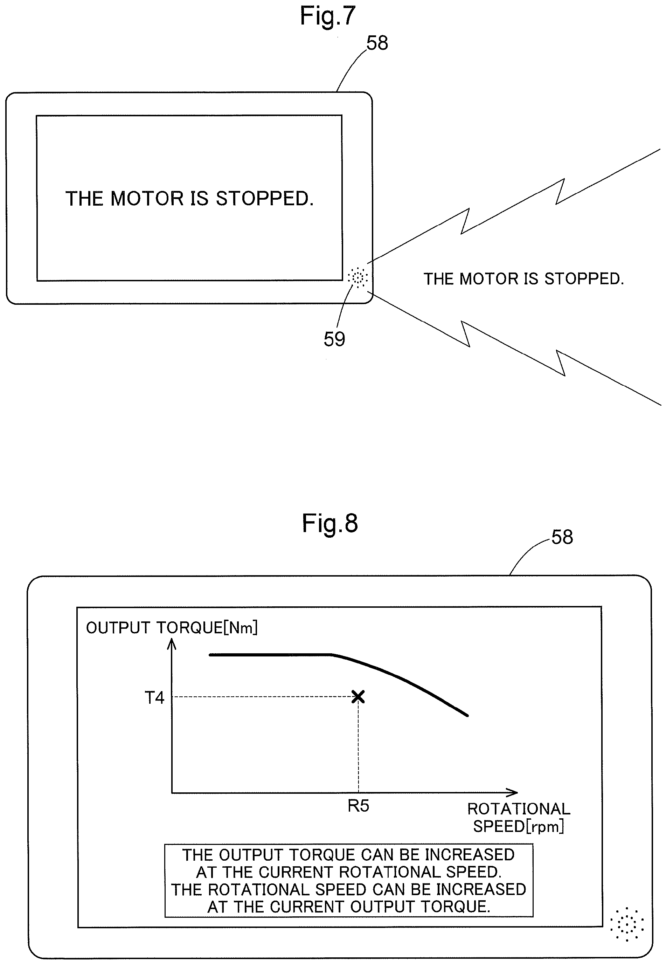

Here, when driving of the motor M is stopped irrespective of the required rotational speed as described above, it is preferable that the notification unit 57 outputs a notification indicating that driving of the motor M is stopped, so that the operator can know that the motor M is unintentionally stopped. That is to say, when driving of the motor M is stopped irrespective of the required rotational speed, it is preferable to display a message such as "The motor is stopped." on a display screen of a display device 58 provided in the driving section 3 of the tractor or output audio saying "The motor is stopped." from a speaker 59 as shown in FIG. 7. This enables the operator to know that driving of the motor M is unintentionally stopped. Alternatively, the notification unit 57 may be configured to output the notification indicating that driving of the motor M is stopped with use of a buzzer or a lamp provided on the body of the tractor.

Alternatively, as shown in FIG. 8, a configuration is also possible in which the output map of the motor M is displayed on the display screen of the display device 58 together with state information indicative of the state of the motor M including the current rotational speed and the current output torque of the motor M, for example. FIG. 8 shows a case where the current rotational speed of the motor M is R5 and the current output torque of the motor M is T4, and an x mark is shown at a corresponding position on the output map. By displaying the current state information on the output map as described above, it is possible to make the driver know that the output torque can be further increased with the current rotational speed R5 maintained or the rotational speed can be further increased with the current output torque T4 maintained. The notification unit 57 may be configured to display such state information on the output map or further display a message like that shown in FIG. 8 on the display screen.

### Other Embodiments

The electric work vehicle is a tractor in the above-described embodiment, but the electric work vehicle may also be a work vehicle other than a tractor, such as a rice transplanter, a combine, a construction machine, or a lawn mower.

The motor M is a three-phase motor and the inverter 14 includes three arm portions A in the above-described embodiment, but the motor M does not necessarily need to be a three-phase motor, and the number of arm portions A of the inverter 14 can be set in accordance with the number of phases of the motor M.

In the above embodiment, the output map is defined in such a manner that the motor M stops when the rotational speed of the motor M is not higher than the first rotational speed R1 set in advance. However, the output map may also be configured in such a manner that the motor M does not stop even when the rotational speed of the motor M is equal to or lower than the first rotational speed R1 set in advance.

In the above embodiment, the output map is defined in such a manner that the motor M stops when the rotational speed of the motor M is higher than or equal to the second rotational speed R4, which is higher than the first rotational speed R1. However, the output map may also be defined in such a manner that the motor M does not stop even when the rotational speed of the motor M is higher than or equal to the second rotational speed R4, which is higher than the first rotational speed R1. In this case, the motor M may be configured to stop in accordance with the output torque of the motor M or when the rotational speed of the motor M reaches a rated rotational speed of the motor M that is higher than the second rotational speed R4.

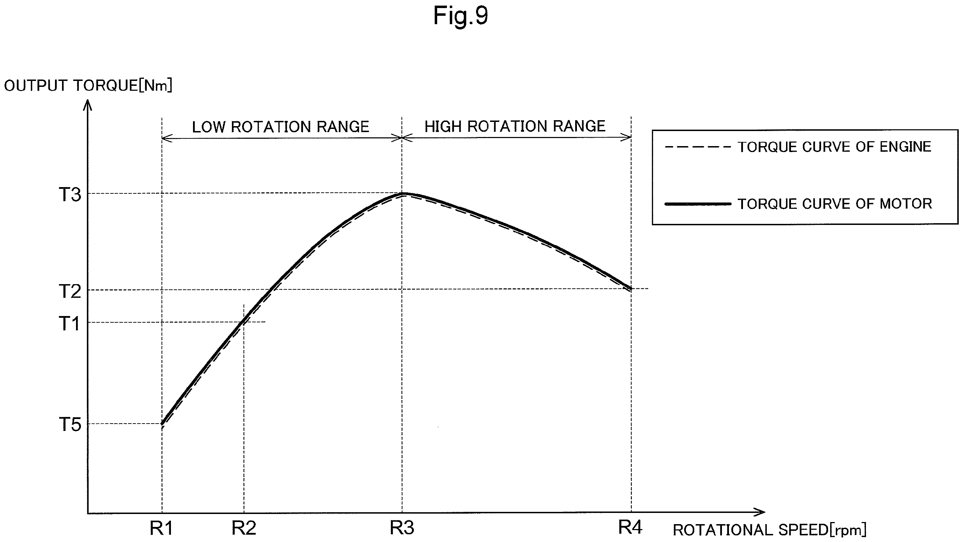

In the above embodiment, the motor can output the constant output torque T3 irrespective of the rotational speed when the rotational speed is within the range from R1 to R3 in the output map shown in FIG. 6. However, a configuration is also possible in which the torque value that the motor M can output increases as the rotational speed of the motor M increases from the first rotational speed R1 to the predetermined rotational speed R3 similarly to the torque curve of an engine. That is to say, a configuration is also possible in which the torque that the motor M can output is T5 when the rotational speed is R1, T1 when the rotational speed is R2, as in the torque curve of an engine, and T3 when the rotational speed is R3. In this case, as shown in FIG. 9, the torque curve can be configured to match the torque curve of an engine when the rotational speed is within the range from R2 to R3. Furthermore, it is preferable to make the torque curve match the torque curve of an engine when the rotational speed is within the range from R3 to R4 as in the above embodiment.

### Industrial Applicability

The present invention is applicable to an electric work vehicle that travels using electric energy.

### Description of Reference Signs

4: Battery
14: Inverter
41: Rotational speed information obtaining unit
42: Travel device
43: Operation member
44: Controller
45: Storage unit
M: Motor
R1: First rotational speed
R3: Predetermined rotational speed
R4: Second rotational speed

## Claims

1. An electric work vehicle comprising:
a battery installed in a machine body;
an inverter configured to convert DC power that is based on output from the battery to AC power;
a motor configured to be driven by the AC power converted by the inverter;
a rotational speed information obtaining unit configured to obtain rotational speed information indicative of a rotational speed of the motor;
a travel device configured to be driven by the motor;
an operation member configured to change a required rotational speed required for the motor;
a storage unit storing an output map defining a relationship between a torque value that the motor is allowed to output and a rotational speed of the motor; and
a controller configured to control a current flowing through the motor by running the inverter based on the rotational speed information, the required rotational speed, and the output map,
wherein, in a high rotation range where the rotational speed of the motor is at least a predetermined rotational speed, the output map is set so as to have a shape that is similar to a shape of a torque curve defining a relationship between an output torque and a rotational speed of an engine in a non-electric work vehicle.

2. The electric work vehicle according to claim 1,
wherein the high rotation range of the output map is defined in such a manner that the torque value that the motor is allowed to output decreases as the rotational speed of the motor increases from the predetermined rotational speed.

3. The electric work vehicle according to claim 1 or 2,
wherein the output map is defined in such a manner that the motor stops when the rotational speed of the motor is not higher than a first rotational speed set in advance.

4. The electric work vehicle according to claim 3,
wherein the output map is defined in such a manner that the motor stops when the rotational speed of the motor is higher than or equal to a second rotational speed that is higher than the first rotational speed.

5. The electric work vehicle according to claim 4,
wherein the output map is defined in such a manner that, when a range of rotational speed at which the motor is rotatable is divided into a low rotation range including the first rotational speed and the high rotation range including the second rotational speed, the torque value that the motor is allowed to output increases as the rotational speed of the motor increases from the first rotational speed to the predetermined rotational speed.

6. The electric work vehicle according to claim 4,
wherein the output map is defined in such a manner that, when a range of rotational speed at which the motor is rotatable is divided into a low rotation range including the first rotational speed and the high rotation range including the second rotational speed, the torque value that the motor is allowed to output is constant when the rotational speed of the motor is within a range from the first rotational speed to the predetermined rotational speed.
